# EUROPÄISCHE PATENTANMELDUNG

(11) **EP 2 679 337 A1**
(43) Veröffentlichungstag der Anmeldung: **01.01.2014**
(21) Anmeldenummer: 13163447.9
(22) Anmeldetag: 12.04.2013
(51) Int. Cl.: B23Q 3/06, B23B 31/26

(54) **Spannkopf**

(30) Priorität: 29.06.2012 DE 102012105759
(71) Anmelder: Röhm GmbH, 89567 Sontheim/Brenz (DE)
(72) Erfinder: Schenk, Peter, 89168 Niederstotzingen (DE); Hangleiter, Eugen, 89568 Hermaringen (DE); Miller, Klaus, 89168 Niederstotzingen (DE)
(74) Vertreter: Hentrich, Swen

(57) **Zusammenfassung**

Die Erfindung betrifft einen Spannkopf mit einem Futterkörper (2), in dem ein durch einen Elektroantrieb (5) zwischen einer Spannstellung und einer Lösestellung verstellbares Spannstück (3) angeordnet ist zur Betätigung einer, mindestens zwei Zangenbacken (12) aufweisenden, Segmentspannzange (4). Zum Lösen der gespannten Segmentspannzange (4) ist ein von dem Elektroantrieb (5) unabhängig betätigbares Notöffnungsmittel vorgesehen.

## Beschreibung

Die Erfindung betrifft einen Spannkopf mit einem Futterkörper, in dem ein durch einen Elektroantrieb zwischen einer Spannstellung und einer Lösestellung verstellbares Spannstück angeordnet ist zur Betätigung einer, mindestens zwei Zangenbacken aufweisenden, Segmentspannzange.

Ein solcher Spannkopf wird beispielsweise bei Palettenspannsystemen eingesetzt. Hierbei kommen mehrere dieser Spannköpfe zum Einsatz, die mit der Spannpalette zugeordneten Anzugbolzen wechselwirken und diese spannen. Ein Problem, das hierbei jedoch auftreten kann ist, dass bei einem Ausfall des Elektroantriebes eines einzelnen gespannten Spannkopfes die Palette nicht mehr aus dem Spannsystem entnommen werden kann. Somit muss bei einem derartigen Ausfall die Spannpalette oftmals destruktiv bearbeitet werden, um diese aus dem Spannsystem entnehmen zu können und den defekten Spannkopf auszutauschen. Die gleiche Problematik tritt auch dann auf, wenn anstelle des Anzugsbolzens einer Spannpalette ein Werkzeug in dem Spannkopf gespannt ist. Auch hier besteht die Problematik, dass bei einem Ausfall des Elektroabtriebes das Werkzeug nicht mehr aus dem Spannkopf entnommen werden kann. Dies führt damit zu erhöhten Kosten und gegebenenfalls zu Fertigungsausfällen, aufgrund der zeitaufwändigen Wartungsarbeiten.

Der Erfindung liegt die Aufgabe zugrunde, einen Spannkopf der eingangs genannten Art derart auszubilden, dass ein sicheres Lösen eines in dem Spannkopf gespannten Gegenstandes in jedem Betriebszustand erfolgen kann.

Diese Aufgabe wird nach der Erfindung bei einem Spannkopf der eingangs gennannten Art dadurch gelöst, dass zum Lösen der gespannten Segmentspannzange ein von dem Elektroantrieb unabhängig betätigbares Notöffnungsmittel vorgesehen ist. Soll der gespannte Spannkopf gelöst werden, so konnte dies bislang nur dann erfolgen, wenn der Elektroantrieb die Segmentspannzange öffnet. Bei einem Ausfall des Antriebes war es bislang nicht möglich, die Segmentspannzange zu öffnen. Durch das Notöffnungsmittel kann also nun die Segmentspannzange unabhängig von dem Elektroantrieb geöffnet werden und ein in dem Spannkopf gespannter Gegenstand, wie beispielsweise ein Anzugsbolzen einer Spannpalette oder ein anderes Werkzeug, kann auch bei einem Ausfall des Elektroantriebes problemlos aus dem Spannkopf entnommen werden.

Als günstig hat es sich zudem gezeigt, wenn das Spannstück durch das Notöffnungsmittel aus der Spannstellung in die Lösestellung verstellbar ist. Durch die Einwirkung des Notöffnungsmittels auf das Spannstück wird die interne Funktionsweise des Spannkopfes ausgenützt, wodurch ein einfaches Lösen der gespannten Segmentspannzange realisiert ist. Im Rahmen der Erfindung ist es natürlich auch denkbar, dass das Notöffnungsmittel beispielsweise destruktiv auf die Segmentspannzange einwirkt und diese dadurch außerhalb des Eingriffes mit dem gespannten Gegenstand bringt.

Als vorteilhaft hat es zudem erwiesen, wenn das Notöffnungsmittel zum Öffnen der gespannten Segmentspannzange einen Spindeltrieb zur Verstellung des Spannstückes aufweist. Durch die Verwendung eines Spindeltriebes kann insbesondere eine hohe Funktionstüchtigkeit gewährleistet werden, was sich positiv auf die Funktionsfähigkeit des erfindungsgemäßen Spannkopfes auswirkt. Im Rahmen der Erfindung ist zudem auch eine mechanische oder manuelle Verstellung des Elektroantriebes vorgesehen, der zu diesem Zweck von der dem Spannstück abgewandten Seite her zugänglich ist.

Als besonders vorteilhaft hat es sich zudem gezeigt, wenn der Spindeltrieb als eine axial durch eine Spindelstange verstellbare und auf das Spannstück einwirkende Spindelmutter gebildet ist. Dies wirkt sich positiv auf die Zuverlässigkeit des Notöffnungsmittels aus, da durch die Drehbewegung der Spindelstange eine sehr störunanfällige axiale Verstellung der im Futterkörper geführten Spindelmutter gegeben ist, wodurch das Spannstück axial aus der Spannstellung in die Lösestellung verstellt wird. Durch die Gestaltung der Spindelstange kann zudem die auf das Spannstück einwirkende Kraft gezielt eingestellt werden.

Als günstig hat es sich zudem erwiesen, wenn der Spindeltrieb durch einen um die Futterachse drehbaren Gewindering zur Verstellung eines spindelnd auf das Spannstück einwirkenden Gewindesegmentes gebildet ist. Bei einer Verdrehung des Gewinderinges, der im Rahmen der Erfindung auch im Futterkörper geführt sein kann, wird das Gewindesegment axial gespindelt und verstellt dabei das Spannstück aus der Spannstellung in die Lösestellung. Das Gewindesegment kann dabei entweder mit dem Spannstück einstückig gebildet sein, oder lediglich auf dieses einwirken. Im Rahmen der Erfindung ist es zudem vorgesehen, dass das Gewindesegment außenumfangsseitig an mindestens einem in dem Futterkörper geführten Lösebolzen ausgebildet ist.

Als äußerst günstig hat es sich zudem gezeigt, wenn das Gewindesegment an dem Außenumfang eines im Futterkörper geführten Spindelringes ausgebildet ist. Die Verwendung eines Spindelringes wirkt sich dabei positiv auf die Kraftübertragung auf das Spannstück aus, da die Beaufschlagungsfläche auf das Spannstück vergrößert wird. Durch die Führung des Spindelringes im Futterkörper ist zudem gewährleistet, dass sich dieser bei der Verstellung des Gewinderinges nicht verdreht und dadurch axial gespindelt wird. Im Rahmen der Erfindung ist es auch vorgesehen, dass der Spindelring integral mit dem Spannstück gebildet ist, wodurch lediglich das Spannstück im Futterkörper geführt sein müsste.

Als vorteilhaft hat es sich zudem erwiesen, wenn ein vorzugsweise dem Futterkörper zugeordnetes Bedienelement zur Verstellung des Spindeltriebes vorgesehen ist. Für den Fall, dass der Elektroantrieb ausfällt, kann nun der Spindeltrieb manuell von außen verstellt werden, wodurch das Spannstück axial aus der Spannstellung in die Lösestellung überführt wird. Im Rahmen der Erfindung ist es natürlich auch denkbar, dass das Bedienelement nicht dem Futterkörper zugeordnet ist, sondern in eine im Futterkörper vorgesehene Öffnung eingeführt werden muss, um auf den Spindeltrieb einzuwirken und damit das Spannstück aus der Spannstellung in die Lösestellung zu überführen. Die Betätigung des Bedienelementes kann dabei in üblicher Weise erfolgen, so kann dies unter anderem manuell aber auch durch einen zusätzlichen Antrieb realisiert sein, wobei bei der letztgenannten Ausführung auch das verwendete Drehmoment begrenzt sein kann.

Für die Benutzerfreundlichkeit hat es sich zudem vorteilhaft gezeigt, wenn mindestens ein Kegeltrieb zur Koppelung des Bedienelementes mit dem Spindeltrieb vorgesehen ist. Durch die Verwendung eines Kegeltriebes kann die auf das Bedienelement ausgeübte Kraft sehr zuverlässig auf den Spindeltrieb übertragen werden. Zudem kann durch die Umlenkung das Bedienelement an gut zugänglichen Positionen angebracht werden, was sich positiv auf die Benutzerfreundlichkeit des erfindungsgemäßen Spannkopfes auswirkt. Zusätzlich ist es im Rahmen der Erfindung vorgesehen, dass die Kopplung zwischen dem Bedienelement und dem Spindeltrieb über andere geeignete Mittel realisiert ist.

Als günstig hat es sich weiterhin erwiesen, wenn ein mit einer Druckmittelleitung verbundener Druckmittelanschluss vorgesehen ist, über den eine Kolbenfläche des als Kolben fungierenden und in einer Kolbenkammer angeordneten Spannstückes mittels einem Druckmittel beaufschlagbar ist. Dieses Druckmittel kann beispielsweise Luft, Öl oder dergleichen sein. Durch die Zuführung eines derartigen Druckmittels mittels einer zentralen Zuleitung ist zudem gewährleistet, dass die Notöffnung bei allen im Einsatz befindlichen Spannköpfen, die an diese zentrale Zuleitung angeschlossen sind, simultan erfolgt.

Als besonders günstig hat es sich gezeigt, wenn dem Spannstück ein Kragen zur Vergrößerung der Kolbenfläche zugeordnet ist. Durch die Vergrößerung der Kolbenfläche kann eine größere Kraft auf das Spannstück einwirken, was sich positiv auf die Notlöseeigenschaften des Notöffnungsmittels auswirkt. Im Rahmen der Erfindung kann dieser Kragen integral mit dem Spannstück oder als separates Bauteil gebildet ist.

Als vorteilhaft hat es sich zudem erwiesen, wenn der Druckmittelanschluss dem Futterkörper zugeordnet ist. Dadurch kann das Druckmittel leicht angeschlossen werden und ist im Falle des Ausfalls des Elektroantriebes schnell einsetzbar. Im Rahmen der Erfindung ist es natürlich auch denkbar, dass der Druckmittelanschluss dem Maschinentisch zugeordnet ist und das Druckmittel durch geeignete Zuleitungen in die in dem Futterkörper ausgebildete Kolbenkammer eingeleitet werden kann.

Als besonders günstig hat es sich gezeigt, wenn die axiale Position des Spannstückes im Futterkörper relativ zur axialen Lage des Elektroantriebes verstellbar ist. Dadurch muss das Notöffnungsmittel lediglich das Spannstück verstellen und die Lage des Elektroantriebes im Futterkörper muss nicht verstellt werden. Im Rahmen der Erfindung ist es auch vorgesehen, dass das Spannstück und der Elektroantrieb fest miteinander verbunden sind, was bedeutet, dass durch das Notöffnungsmittel sowohl als Spannstück als auch der Elektroantrieb axial verstellt werden.

Im Rahmen der Erfindung hat es sich auch als günstig erwiesen, wenn bei einer Kombination aus mindestens einem Spannkopf und einer Spannpalette mit einer zur Zahl der Spannköpfe korrespondierenden Anzahl an Einzugsbolzen der Druckmittelanschluss der Spannpalette zugeordnet ist. Durch die Zuordnung des Druckmittelanschlusses zu der Spannpalette kann das Druckmittel einfach angeschlossen werden, was sich positiv auf die Benutzerfreundlichkeit der erfindungsgemäßen Kombination auswirkt.

Als besonders vorteilhaft hat es sich zudem erwiesen, wenn die Zuführung des Druckmittels in die jeweilige Kolbenkammer des mindestens einen Spannkopfes durch den korrespondierenden Einzugsbolzen realisiert ist. Dadurch kann das Druckmittel zentral in die Spannpalette eingeführt werden und wird durch die Einzugsbolzen in die jeweilige Kolbenkammer geleitet, wodurch die Spannstücke der jeweiligen Spannköpfe axial simultan verstellt werden.

Im folgenden wird die Erfindung an in der Zeichnung dargestellten Ausführungsbeispielen näher erläutert; es zeigen:
- Fig. 1: eine Schnittansicht eines Spannkopfes mit einer Spindelmutter als Notöffnungsmittel,
- Fig. 2: eine Schnittansicht eines Spannkopfes mit einem Gewindering als Notöffnungsmittel,
- Fig. 3: eine Schnittansicht eines Spannkopfes in Spannstellung mit einem Druckmittelanschluss zur Einleitung eines als Notöffnungsmittel dienenden Druckmittels,
- Fig. 4: eine Schnittansicht des Spannkopfes in Lösestellung mit einem Druckmittelanschluss zur Einleitung eines als Notöffnungsmittel dienenden Druckmittels, und
- Fig. 5: eine Schnittansicht einer Kombination aus einer Spannpalette und einem Spannkopf mit einem Druckmittelanschluss zur Einleitung eines als Notöffnungsmittel dienenden Druckmittels an der Spannpalette.

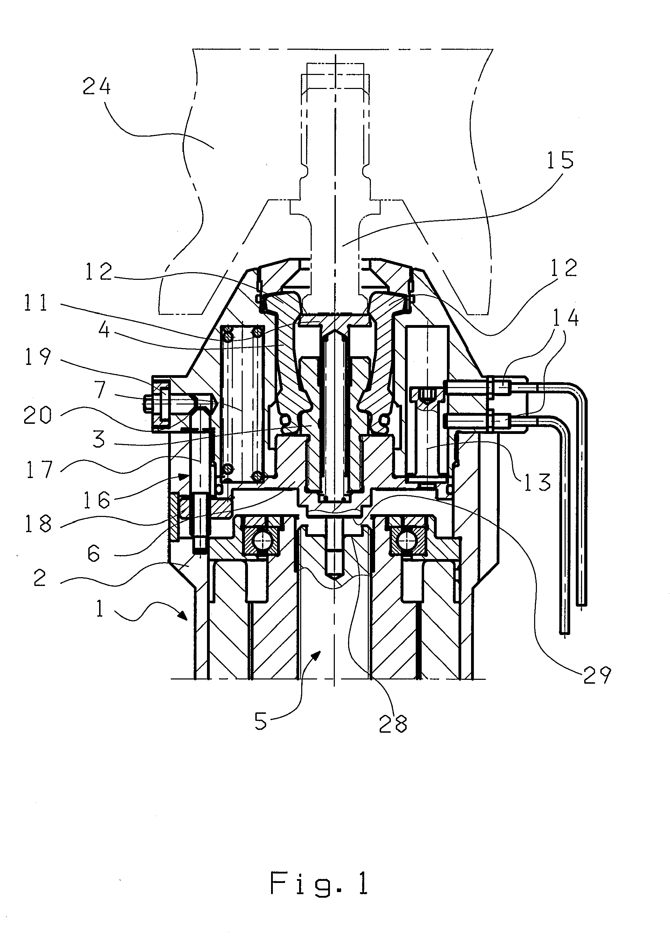

Figur 1 zeigt eine erste Ausführungsform des erfindungsgemäßen Spannkopfes 1. Zu sehen ist ein Futterkörper 2, in dem ein Spannstück 3 gelagert ist, das auf eine Segmentspannzange 4 einwirkt. Im Normalbetrieb verstellt ein Elektroantrieb 5 das Spannstück 3 axial aus der Spannstellung in die Lösestellung. Hierzu wird durch den Elektroantrieb 5 eine Anschlagsfläche 28 gegen einen Gegenanschlag 29 gespindelt, der an einem das Spannstück 3 radial erweiternden Kragen 6 ausgebildet ist. Dadurch wird das Spannstück 3 axial aus der Spannstellung in die Lösestellung verstellt. Durch geeignete Steuerkurven, die an dem Spannstück 3 ausgebildet sind, werden bei dieser Verstellung Spannbacken 12, die der Segmentspannzange 4 zugeordnet sind, radial nach außen verstellt und geben damit einen zuvor gespannten Anzugbolzen 15 frei. Durch einen federnd gelagerten Verschlussdeckel 11 wird der Anzugbolzen 15 dabei aktiv aus dem Spannkopf 1 ausgeworfen. Gleichzeitig hält der Verschlussdeckel 11 in der Lösestellung die Spannbacken 12 radial nach außen gedrückt und damit in einer wohl definierten Position, wodurch ein erneutes Einführen des Anzugbolzens 15 erleichtert ist. Wird nun erneut ein Anzugbolzen 15 in den Spannkopf 1 eingeführt, so wird dadurch der federbewehrte Verschlussdeckel 11 axial in Richtung des Elektroantriebes 5 verstellt. Durch eine Verstellung des Elektroantriebes 5 wird die Anschlagsfläche 28 axial zurück, also entgegen dem Verschlussdeckel 11, gespindelt. Durch eine Spannfeder 7, die im Futterkörper 2 gelagert ist und auf den Kragen 6 des Spannstückes 2 einwirkt, ist bei dieser Verstellung gewährleistet, dass der Gegenanschlag 29 des Kragens 6 stets im Kontakt mit der Anschlagsfläche 28 bleibt. Zur Detektion der Lage des Spannstückes 3 ist dem Kragen 6 ein Lageindikator 13 zugeordnet, dessen Lage durch zwei dem Futterkörper 2 zugeordnete Lagesensoren 14 detektierbar ist.

Sollte nun in gespanntem Zustand der Elektroantrieb 5 ausfallen, so kann der gespannte Anzugbolzen 15 nicht mehr aus dem Spannkopf 1 entnommen werden. Dies führt nun entweder dazu, dass der gespannte Gegenstand destruktiv bearbeitet werden muss, oder der Spannkopf 1 aufwändig zerlegt werden muss, um auf den Lösemechanismus einzuwirken und damit den Anzugbolzen 15 aus dem Spannkopf 1 entnehmen zu können. Dies bedeutet, dass der Futterkörper 2 im Bereich der Segmentspannzange 4 beispielsweise aufgesägt oder in vergleichbarer Weise destruktiv bearbeitet werden muss, um die Spannbacken 12 der Segmentspannzange 4 lösen zu können.

Um dieses Problem zu umgehen, ist bei dem in der Figur 1 dargestellten Spannkopf 1 ein Notöffnungsmittel vorgesehen, das von außen bedienbar ist, um den Spannkopf 1 unabhängig von dem Betriebszustand des Elektromotors 5 aus der Spannstellung in die Lösestellung zu überführen. In dem in der Figur 1 dargestellten Ausführungsbeispiel ist dieses Notöffnungsmittel als ein Spindeltrieb 16 gebildet, der durch eine Spindelstange 17 und eine Spindelmutter 18 gebildet ist. Die Spindelmutter 18 wirkt hierbei auf den das Spannstück 3 radial erweiternden Kragen 6 ein und verstellt dadurch das Spannstück 3 entgegen der Spannfeder 7 aus der Spannstellung in die Lösestellung. Der in der Figur 1 dargestellte Spindeltrieb 16 kann durch ein Bedienelement 19, das dem Futterkörper 2 zugeordnet ist, verstellt werden. In dem hier dargestellten Ausführungsbeispiel wird die Verstellung des Bedienelementes 19 über einen Kegeltrieb 20 auf die Spindelstange 17 übertragen und verdreht diese. Durch eine Relativdrehung zwischen der Spindelspange 17 und der Spindelmutter 18, die zu diesem Zweck in dem Futterkörper geführt ist, wird diese axial gegen das Spannstück 3 gespindelt und verstellt dieses dabei axial relativ zum Elektronantrieb 5 aus der Spannstellung in die Lösestellung. Durch die Lagesensoren 14 können dabei die Position des Spannstückes 3 erkannt werden, wodurch beispielsweise mittels eines optischen Signales die Fehlfunktion des Elektroantriebes 5 angezeigt werden kann und darüber hinaus auch der Notlösevorgang nach erfolgreichem Notlösen abgebrochen werden kann.

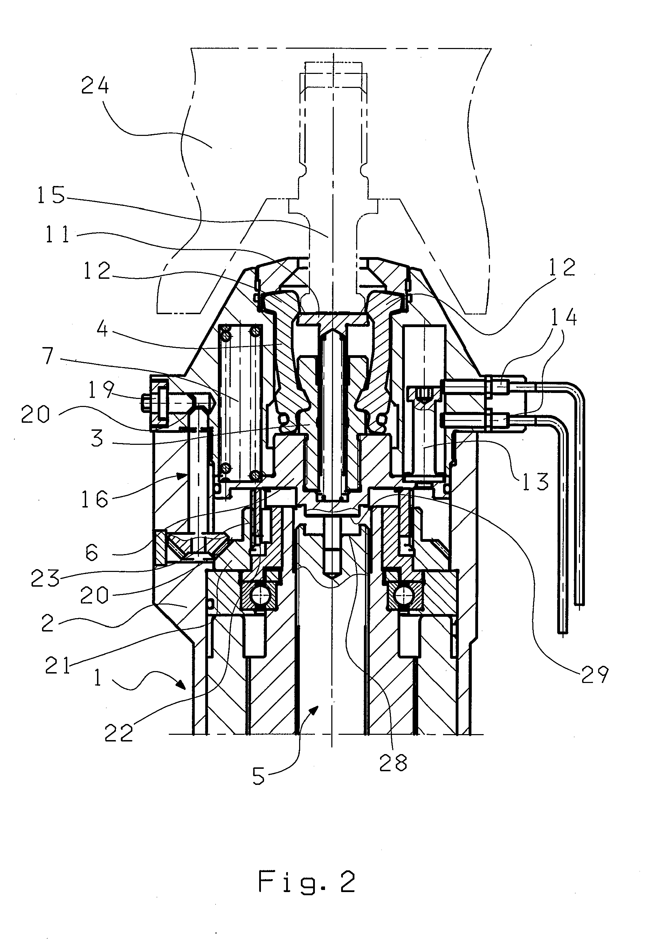

Figur 2 zeigt eine weitere Ausführungsform des erfindungsgemäßen Spannkopfes 1. Hierbei ist das Notöffnungsmittel ebenfalls durch einen Spindeltrieb 16 realisiert, der jedoch aus einem Gewindering 21 und einem Spindelring 22 gebildet ist. Der Spindelring 22 ist in dem Futterkörper 2 geführt und steht über eine Gewindeverbindung 23 mit dem Gewindering 21 im Eingriff, der durch das Bedienelement 19 verstellt werden kann. Wird nun der Gewindering 21 durch das Bedienelement 19 verdreht, spindelt der in dem Futterkörper 2 geführt Spindelring 22 und verstellt dabei das Spannstück 3 aus der Spannstellung in die Lösestellung. In dem gezeigten Ausführungsbeispiel ist das Bedienelement 19 mit dem Gewindering 21 mittels zweier Kegeltriebe 20 gekoppelt und ermöglicht dadurch die Betätigung des Spindeltriebes 16.

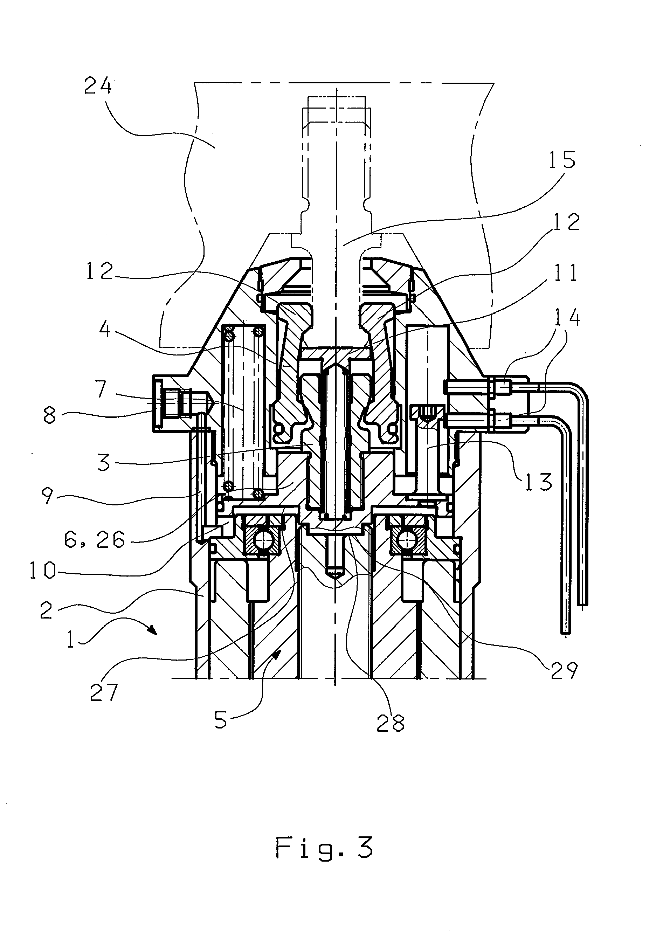

Figur 3 zeigt eine weitere Ausführungsform eines erfindungsgemäßen Spannkopfes 1 in der Spannstellung. Für den Fall, dass der Elektroantrieb 5 ausfallen sollte, ist in dem gezeigten Ausführungsbeispiel dem Futterkörper 2 ein Druckmittelanschluss 8 zugeordnet, der es ermöglicht über eine Druckmittelleitung 9 ein Druckmittel, das als Notöffnungsmittel dient, in eine Kolbenkammer 10 einzuleiten, die zwischen dem Futterkörper 2 und dem Spannstück 3 gebildet und durch den Kragen 6 erweitert ist. Das Spannstück 3 fungiert hierbei also als ein Kolben 26, dessen Kolbenfläche 27 durch den Kragen noch vergrößert wird.

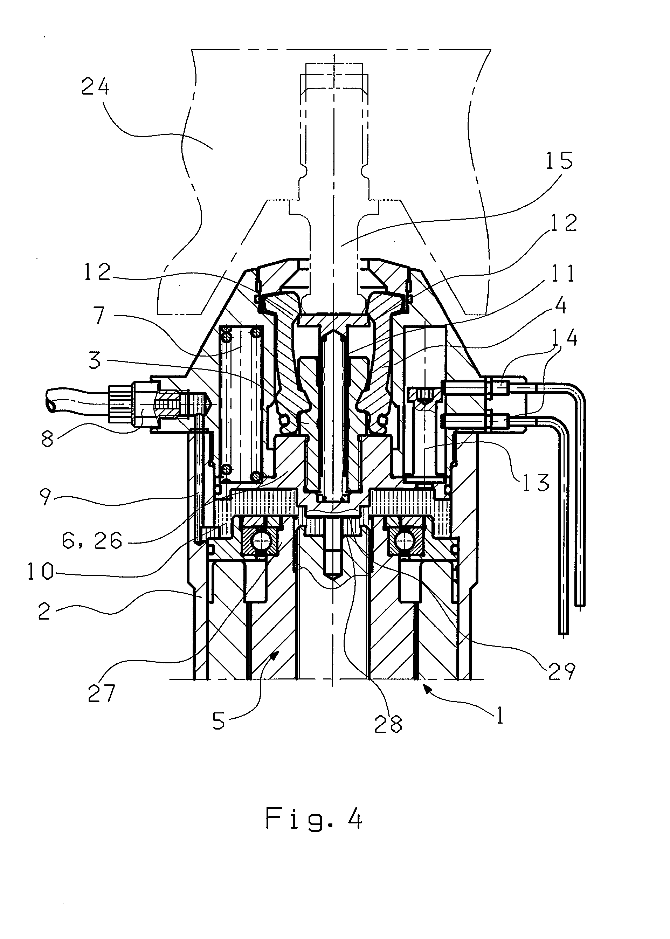

Figur 4 zeigt den erfindungsgemäßen Spannkopf 1, der durch die Einleitung eines Druckmittels als Notöffnungsmittel in den Druckmittelanschluss 8 aus der Spannstellung in die Lösestellung überführt wurde. Um bei einem Ausfall des Elektroantriebes 5 das Spannstück 3 aus der Spannstellung in die Lösestellung überführen und damit den Anzugbolzen 15 eines Werkzeuges aus dem Spannkopf 1 entnehmen zu können, wird durch den dem Futterkörper 2 zugeordneten Druckmittelanschluss 8 ein Druckmittel in die Kolbenkammer 10 eingeleitet. Das Druckmittel wirkt hierbei entgegen der Spannfeder 7 auf die Kolbenfläche 27 ein und verstellt das als Kolben 26 gebildete Spannstück 3 axial relativ zu dem Elektroantrieb 5. Somit erfolgt auch hier eine Trennung des dem Kragen 6 des Spannstückes 3 zugeordneten Gegenanschlages 29 von der Anschlagsfläche 28, die dem Elektroantrieb 5 zugeordnet ist.

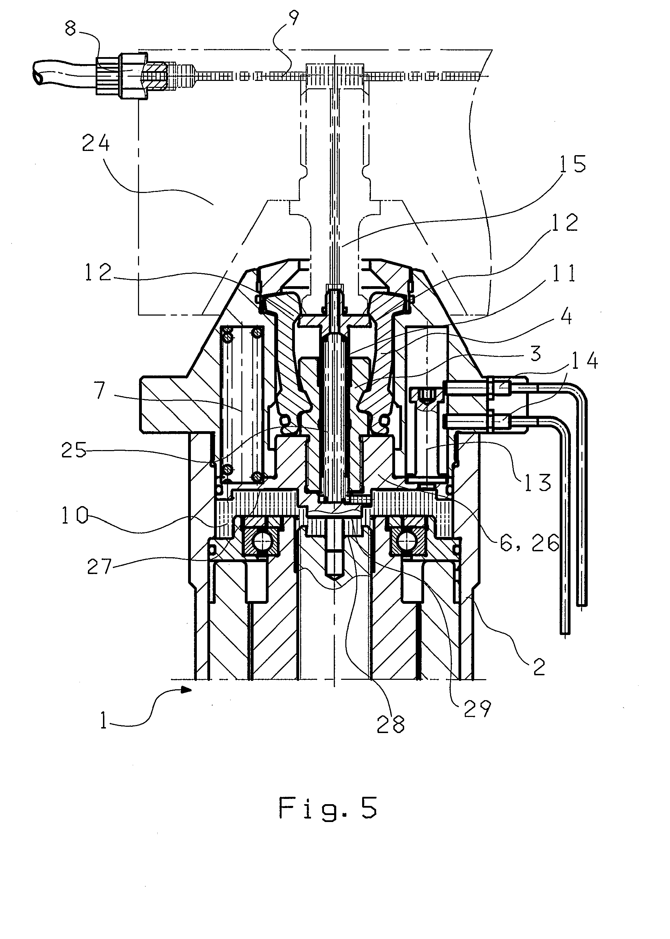

Figur 5 zeigt eine Kombination aus einem erfindungsgemäßen Spannkopf 1 und einem einer Spannpalette 24 zugeordneten Anzugbolzen 15. Der Spannpalette 24 ist dabei der Druckmittelanschluss 8 zugeordnet, über den ein als Notöffnungsmittel dienendes Druckmittel in die in dem Futterkörper 2 gebildete Kolbenkammer 10 zugeführt werden kann. Hierbei ist in dem Anzugbolzen 15 eine Durchführung 25 für das Druckmittel vorgesehen. Zudem weisen der Verschlussdeckel und das Spannstück ebenfalls jeweils eine Durchführung 25 auf, um das Druckmittel in die Kolbenkammer 10 einzuleiten. Damit kann das Druckmittel einfach über einen zentralen Druckmittelanschluss 8 in die Spannpalette 24 eingeleitet werden. Über geeignete Druckmittelleitungen 9, die in der Spannpalette 24 ausgebildet sind, wird das Druckmittel dann in die einzelnen Spannköpfe 1 eingeleitet und verstellt diese axial aus der Spannstellung in die Lösestellung. Damit kann das Notöffnungsmittel über diesen zentralen Druckmittelanschluss 8 mehrere Spannköpfe 1 simultan notöffnen.

### Bezugszeichenliste

- 1: Spannkopf
- 2: Futterkörper
- 3: Spannstück
- 4: Segmentspannzange
- 5: Elektroantrieb
- 6: Kragen
- 7: Spannfeder
- 8: Druckmittelanschluss
- 9: Druckmittelleitung
- 10: Kolbenkammer
- 11: Verschlussdeckel
- 12: Spannbacken
- 13: Lageindikator
- 14: Lagesensor
- 15: Anzugbolzen
- 16: Spindeltrieb
- 17: Spindelstange
- 18: Spindelmutter
- 19: Bedienelement
- 20: Kegeltrieb
- 21: Gewindering
- 22: Spindelring
- 23: Gewindeverbindung
- 24: Spannpalette
- 25: Durchführung
- 26: Kolben
- 27: Kolbenfläche
- 28: Anschlagsfläche
- 29: Gegenanschlag

## Patentansprüche

1. Spannkopf mit einem Futterkörper (2), in dem ein durch einen Elektroantrieb (5) zwischen einer Spannstellung und einer Lösestellung verstellbares Spannstück (3) angeordnet ist zur Betätigung einer, mindestens zwei Zangenbacken (12) aufweisenden, Segmentspannzange (4), **dadurch gekennzeichnet, dass** zum Lösen der gespannten Segmentspannzange (4) ein von dem Elektroantrieb (5) unabhängig betätigbares Notöffnungsmittel vorgesehen ist.

2. Spannkopf nach Anspruch 1, **dadurch gekennzeichnet, dass** das Spannstück (3) durch das Notöffnungsmittel aus der Spannstellung in die Lösestellung verstellbar ist.

3. Spannkopf nach Anspruch 2, **dadurch gekennzeichnet, dass** das Notöffnungsmittel zum Öffnen der gespannten Segmentspannzange (4) einen Spindeltrieb (16) zur Verstellung des Spannstückes (3) aufweist.

4. Spannkopf nach Anspruch 3, **dadurch gekennzeichnet, dass** der Spindeltrieb (16) als eine axial durch an eine Spindelstange (17) verstellbare und auf das Spannstück (3) einwirkende Spindelmutter (18) gebildet ist.

5. Spannkopf nach Anspruch 3, **dadurch gekennzeichnet, dass** der Spindeltrieb (16) durch einen um die Futterachse drehbaren Gewindering (21) zur Verstellung eines spindelnd auf das Spannstück (3) einwirkende Gewindesegmentes gebildet ist.

6. Spannkopf nach Anspruch 5, **dadurch gekennzeichnet, dass** das Gewindesegment an dem Außenumfang eines im Futterkörper (2) geführten Spindelringes (22) ausgebildet ist.

7. Spannkopf nach einem der Ansprüche 3 bis 6, **dadurch gekennzeichnet, dass** ein vorzugsweise dem Futterkörper (2) zugeordnetes Bedienelement (19) zur Verstellung des Spindeltriebes (16) vorgesehen ist.

8. Spannkopf nach Anspruch 7, **dadurch gekennzeichnet, dass** mindestens ein Kegeltrieb (20) zur Koppelung des Bedienelementes (19) mit dem Spindeltrieb (16) vorgesehen ist.

9. Spannkopf nach Anspruch 1 oder 2, **dadurch gekennzeichnet, dass** ein mit einer Druckmittelleitung (9) verbundener Druckmittelanschluss (8) vorgesehen ist, über den eine Kolbenfläche (27) des als Kolben (26) fungierenden und in einer Kolbenkammer (10) angeordneten Spannstückes (3) mittels einem Druckmittel beaufschlagbar ist.

10. Spannkopf nach Anspruch 9, **dadurch gekennzeichnet, dass** dem Spannstück (3) ein Kragen (6) zur Vergrößerung der Kolbenfläche (27) zugeordnet ist.

11. Spannstück nach Anspruch 9 oder 10, **dadurch gekennzeichnet, dass** der Druckmittelanschluss (8) dem Futterkörper (2) zugeordnet ist.

12. Spannkopf nach einem der Ansprüche 1 bis 11, **dadurch gekennzeichnet, dass** die axiale Position des Spannstückes (3) im Futterkörper (2) relativ zur axialen Lage des Elektroantriebes (5) verstellbar ist.

13. Kombination aus mindestens einem Spannkopf nach Anspruch 9 und einer Spannpalette (24) mit einer zur Zahl der Spannköpfe (1) korrespondierenden Anzahl an Anzugsbolzen (15), **dadurch gekennzeichnet, dass** der Druckmittelanschluss (8) der Spannpalette (24) zugeordnet ist.

14. Kombination nach Anspruch 13, **dadurch gekennzeichnet, dass** die Zuführung des Druckmittels in die jeweilige Kolbenkammer (10) des mindestens einen Spannkopfes (1) durch den korrespondierenden Anzugsbolzen (15) realisiert ist.
